(19) **Europäisches Patentamt**

**European Patent Office**

**Office européen des brevets**

(11) **EP 0 564 802 B1**

(12) **EUROPÄISCHE PATENTSCHRIFT**

(45) Veröffentlichungstag und Bekanntmachung des Hinweises auf die Patenterteilung:
**09.10.1996 Patentblatt 1996/41**

(51) Int Cl.6: **C03C 3/078**, C03C 3/085, C03C 3/093, C03C 4/20, C03C 3/087, C03C 3/097, C03C 4/00

(21) Anmeldenummer: **93103161.1**

(22) Anmeldetag: **27.02.1993**

(54) **Blei- und bariumfreies Kristallglas mit hoher Lichttransmission**

Lead- and barium-free crystal glass with high light transmission

Verre sonore à haute transmission de lumière sans plomb ni baryum

(84) Benannte Vertragsstaaten:
**AT BE CH DE DK ES FR GB IT LI NL SE**

(30) Priorität: **10.04.1992 DE 4212092**
**06.02.1993 DE 4303474**

(43) Veröffentlichungstag der Anmeldung:
**13.10.1993 Patentblatt 1993/41**

(73) Patentinhaber:
• **Schott Glaswerke**
**55122 Mainz (DE)**
Benannte Vertragsstaaten:
**AT BE CH DE DK ES FR GB IT LI NL SE**
• **Carl-Zeiss-Stiftung**
**trading as SCHOTT GLASWERKE**
**55122 Mainz (DE)**
Benannte Vertragsstaaten:
**GB**

(72) Erfinder:
• **Clement, Marc, Dr.**
**W-6500 Mainz (DE)**
• **Brix, Peter, Dr.**
**W-6500 Mainz (DE)**
• **Gaschler, Ludwig**
**W-6500 Mainz (DE)**

(56) Entgegenhaltungen:
EP-A- 0 547 263          WO-A-92/19559
GB-A- 2 115 403          US-A- 4 012 131

• CHEMICAL ABSTRACTS, vol. 93, no. 10, 8. September 1980, Columbus, Ohio, US; abstract no. 100398z, Seite 317 ; & JP-A-55 037 431 (SUMIDA KOGAKU GARASU SEIZOSHO) 15. März 1980

**Beschreibung**

Die Erfindung betrifft ein blei- und bariumfreies Kristallglas zur Herstellung von hochwertigen Gläsern und Haushaltsgegenständen mit einer Lichttransmission von wenigstens 85 %, einem Brechwert $n_d$ von größer als 1.52, einer Dichte von mindestens 2.45 g/cm$^3$, einen $K_2O$ + ZnO-Anteil von größer 10 Gew.-% mit hoher hydrolytischer Beständigkeit und guter Solarisationsbeständigkeit.

Schon früher gab es Versuche, Blei und Barium aus Kristallgläsern bzw. aus Bleikristallgläsern durch andere Stoffe zu ersetzen, weil die Gefahr besteht, daß Blei und Barium auch in sehr geringen Mengen, wie sie z.B. aus solchen Gläsern schon nach kurzer Zeit ausgelaugt werden können, toxisch auf den menschlichen Organismus wirken.

Im Rahmen dieser Versuche lag es nahe, stark lichtbrechende ($n_D$ = 1,74) farblose Gläser durch Zusätze von Titandioxid (zum Teil bis zu fast 50 Gew.-%), mit seinem hohen Brechungsindex, herzustellen.

Allerdings scheiterten die Versuche daran, daß diese hochtitanhaltigen Gläser eine für Kristallglas zu hohe Schleifhärte und eine mangelnde Säurepolierbarkeit besitzen.

Gläser, die das Kristallglaskennzeichnungsgesetz vom 25. Juni 1971, Bundesgesetzblatt Nr. 59, S. 857, vom 30. Juni 1971 erfüllen sollen, müssen PbO, BaO, $K_2O$ oder ZnO alleine oder zusammen in Höhe von mindestens 10 Gew.-% enthalten, wobei eine Dichte von 2,45 g/cm$^3$ und eine Brechzahl $n_d$ von mindestens 1,520 erreicht werden muß.

Wird die Forderung erhoben, daß das Kristallglas bzw. Bleikristallglas blei- und bariumfrei sein muß, so kann die gesetzliche Bestimmung eben nur durch entsprechende Mengen an ZnO und $K_2O$ erfüllt werden.

Die Verwendung von $K_2O$ in größeren Mengen fördert zwar die Einschmelzbarkeit der Gläser, hat aber auf der anderen Seite negative Auswirkungen auf die chemische Beständigkeit dieser Gläser.

Desweiteren gibt es Anzeichen, daß ZnO im Vergleich zu CaO die chemische Beständigkeit gegen Alkalilauge und Natriumphosphat verringert.

Dies würde für ein Kristallglas bedeuten, daß es im Hinblick auf eine Beständigkeit gegenüber alkalischen und phosphathaltigen Reinigungsmitteln eine geringe Beständigkeit besitzt.

Weiterhin wird durch Gehalte an ZnO die Ritzhärte von Gläsern erhöht, wodurch die Gläser schleifhärter werden, was ebenfalls nicht erwünscht ist, wenn die Kristallgläser geschliffen werden sollen.

Zusätzlich besteht die Gefahr, daß die ZnO-Rohstoffe deutliche Mengen an CdO enthalten können. CdO ist schon in geringen Konzentrationen stark toxisch.

Der Zusatz von ZnO ist daher problematisch und sollte auf kleine Anteile beschränkt bleiben, oder ganz unterbleiben.

Eine weitere Forderung an hochwertiges Kristallglas ist die Eigenschaft, daß sich dieses bei der Einwirkung von kurzwelliger Strahlung (z.B. UV-Strahlung) nicht verfärbt, d.h. nicht solarisiert.

Unter Solarisation wird hier die Eigenschaft eines Glases verstanden, sich durch Einwirkung des Sonnenlichtes zu verfärben. Dabei spielt vor allem der energiereiche UV-Anteil des Sonnenlichtes eine wichtige Rolle und bewirkt bei diesen Gläsern einen Transmissionsrückgang vor allem jenseits der Wellenlänge von 380 nm, welches als UV-Grenze des sichtbaren Lichtes anzusehen ist. Der Transmissionsrückgang jenseits dieser Grenze spielt für den Farbeindruck des Glases keine Rolle, da er einen Spektralbereich betrifft, der für das Auge nicht mehr zugänglich ist. Ausläufer dieses Transmissionsrückganges können aber bis in den sichtbaren Bereich des Lichtes hineinragen, was dann zu einer störenden Färbung der Gläser führt. Bei den erfindungsgemäßen hochwertigen Kristallgläsern kann davon ausgegangen werden, daß bei den gewählten Bestrahlungsbedingungen ein Transmissionsrückgang von 3 % bei einer Wellenlänge von 380 nm nicht überschritten werden sollte.

Aus der US-PS 2,901,365 ist ein Glas mit einer Dichte von 2.55 - 2.65 g/cm$^3$ und einem Brechungsindex $n_d$ von 1.56 - 1.58 bekannt, das sich hauptsächlich aus folgenden Bestandteilen (Gew.-%), 58 - 64 $SiO_2$; 0 - 17.5 $Na_2O$; 0 - 15.5 $K_2O$; 0 - 5 $Li_2O$; Σ der Alkalimetalloxide 12.5 - 17.5; 7.5 - 14 der Erdalkalimetalloxide ausgewählt aus CaO und CaO + MgO; 5 - 9 $TiO_2$; 0 - 10 $B_2O_3$; 0 - 3 $Al_2O_3$; zusammensetzt, wobei die Hauptbestandteile plus geringe Mengen an farbgebenden Verbindungen sich im Glas zu 100 Gew.-% addieren.

Aufgabe dieser US-PS 2,901,365 ist es, ophthalmische Gläser, also Brillengläser, zur Verfügung zu stellen, die leicht sind und dabei einen relativ hohen Brechungsindex aufweisen.

Diese Gläser liegen in einem Alkali-Kalk-Silikat-System dem $TiO_2$ zugesetzt werden muß, um die geringe Dichte der Gläser zu gewährleisten und einen hohen Brechungsindex zu erreichen.

Dazu wird dem Glas mindestens 5 Gew.-% $TiO_2$ zugegeben, da weniger $TiO_2$ nicht ausreicht, um die Aufgabe zu lösen.

Diese Gläser enthalten weder $Nb_2O_5$ oder $Ta_2O_5$ noch $TiO_2$ zusammen mit $Al_2O_3$.

Die US 4,012,131 befaßt sich mit hochbrechenden ophtalmischen Gläsern, deren Oberflächeneigenschaften durch Ionenaustausch verändert werden. Die Glaszusammensetzung enthält (in Gew.-%) 3 - 11 $Na_2O$; 7 - 15 $K_2O$; bis zu 5 % andere Alkali-Metalloxide; von 12 - 20 % Alkalimetalloxide insgesamt; 3 - 6 CaO; 3 - 11 ZnO und/oder MgO und als Rest auf 100 % $SiO_2$. Die US 4,012,131 lehrt nicht die Verwendung von $Nb_2O_5$, setzt nicht zwingend $TiO_2$ ein, zeigt nicht den kombinierten Einsatz von $Al_2O_3$ und $TiO_2$, der nach der vorliegenden Erfindung notwendig ist, und weist immer hohe Anteile an ZnO auf, wobei ZnO und MgO hier in bestimmten Anteilen vorliegen müssen, um die Diffusionsrate und die Eindringtiefe während des Ionenaustauschvorgangs nicht durch die Anwesenheit von zuviel CaO, das den Austauschvorgang verzögern würde, zu gefährden.

Aus der US-PS 4,036,623 ist ein Verfahren zur chemischen Härtung eines ophthalmischen Kronglases bekannt, mit der Zusammensetzung $SiO_2$ 60 - 75; $Na_2O$ 5 - 10; $K_2O$ 5 - 10; CaO 7 - 15; LiO 0 - 5; MgO 0 - 2; ZnO 2 - 8, $Al_2O_3$ 0 - 7; $ZrO_2$ 0 - 2; $TiO_2$ 0 - 2; $Sb_2O_3$ 0 - 2; $CeO_2$ 0 - 4.5; $As_2O_3$ 0 - 1.5, wobei diese Gläser dann noch temperaturbehandelt und in ein erhitztes Salzbad getaucht werden.

Dieses US-Patent betrifft ein Verfahren um Brillengläser, Sonnenbrillengläser und ähnliche ophthalmische Linsen durch chemische Härtung mittels Ionenaustausch in ihren Gebrauchseigenschaften zu verbessern.

Dieses Ausgangsglas nach der US-PS 4,036,623 enthält zwingend mindestens 2 Gew.-% ZnO und maximal 10 Gew.-% $K_2O$.

Ein Gehalt an ZnO ist jedoch gerade bei Kristallgläsern nicht wünschenswert, einmal wegen der dann erhöhten Schleifhärte und zum anderen wegen einer möglichen CdO-Kontamination durch die ZnO-Rohstoffe.

Außerdem wird, wie schon oben ausgeführt, durch ZnO die Beständigkeit gegen alkalische und phosphorhaltige Reinigungsmittel erheblich reduziert.

Das Glas enthält auch kein $Nb_2O_5$.

Weder die für Kristallglas geforderte Dichte von mindestens 2.45 $g/cm^3$, noch der Brechwert von größer als 1.52 wird von den meisten der hier angegebenen Glaszusammensetzungen erreicht werden.

Aus der älteren Anmeldung WO 92/19559, einem nach Art. 54(3),(4) EPÜ zu berücksichtigenden Stand der Technik, ist eine bleifreie Kristallglaszusammensetzung für Gebrauchsgläser mit einem Brechwert von 1,53 bis 1,58 bekannt, wobei diese Glaszusammensetzungen (in Gew.-% auf Oxidbasis) enthalten: 50 - 65 $SiO_2$; 0,1 - 10 $Al_2O_3$; 0,5 - 17 $ZrO_2$; 10 - 22 $K_2O$ und/oder 10 - 22 $Na_2O$; 2 - 10 CaO und/oder MgO, und der Gehalt an $Fe_2O_3$ in einem Bereich zwischen 0,01 -0,025 liegt.

Zusätzlich kann das Glas 0,1 - 10 BaO, ZnO, $B_2O_3$ und $Li_2O$, und für sich oder in Kombination Spuren bis zum 1 % an $Sb_2O_3$, $TiO_2$ und $SnO_2$ enthalten.

Das bleifreie Glas nach der WO 92/19559 enthält kein $Nb_2O_5$, benötigt kein $TiO_2$ in Verbindung mit $Al_2O_3$, aber immer mindestens 0,5 % $ZrO_2$ und kann darüberhinaus bis zu 10 % BaO enthalten.

Die WO 92/19559 hat nicht die Aufgabe ein blei- und bariumfreies Kristallglas vorzuschlagen.

Die ältere EP 0 547 263 A1, ebenfalls ein nach Art. 54(3),(4) EPÜ zu berücksichtigender Stand der Technik, legt ein bleifreies Zinksilikat-Kristallglas mit einem Brechungsindex von ≥ 1,52 offen, das eine Zusammensetzung von (in Gew.-% auf Oxidbasis) 65 - 70 $SiO_2$; 6 - 9 CaO; 4 - 12 $K_2O$; 4 - 12 $Na_2O$; 0,5 - 5 $B_2O_3$; 4 - 7 ZnO; 0,1 - 1 $Sb_2O_3$ und 1 - 6 $ZrO_2$ und/oder $TiO_2$ aufweist, mit der Maßgabe, daß die Summe der Oxidbestandteile 100 Gew.-% beträgt.

Das Zinksilikat-Glas gemäß der EP 0 547 263 A1 benötigt immer mindestens 4 % ZnO, enthält kein $Nb_2O_3$, benötigt kein $Al_2O_3$, und lehrt nicht den Einsatz von $TiO_2$ zusammen mit $Al_2O_3$.

Ein Gehalt an ZnO ist jedoch bei Kristallgläsern nach der vorliegenden Erfindung nur bedingt erwünscht, da ZnO

- eine erhöhte Schleifhärte,
- eine reduzierte Beständigkeit gegen alkalische und phosphorhaltige Reinigungsmittel, und besonders
- eine mögliche CdO-Kontamination durch die ZnO-Rohstoffe

zur Folge hat.

Auch die EP 0 547 263 A1 hat nicht die Aufgabe ein blei- und bariumfreies Kristallglas vorzustellen.

Aufgabe der vorliegenden Erfindung ist es, ein blei- und bariumfreies Kristallglas zur Herstellung von hochwertigen, toxikologisch absolut unbedenklichen Gläsern und Haushaltsgegenständen mit einer hohen Lichttransmission, hoher hydrolytischer Beständigkeit und sehr geringer Solarisationsneigung zur Verfügung zu stellen, das die gesetzlichen Auflagen erfüllt.

Unter blei- und bariumfrei wird dabei verstanden, daß keine Blei- oder Bariumverbindungen dem Gemenge zugesetzt werden. Jedoch ist es möglich, daß trotz aller Vorkehrungen über Verunreinigungen PbO und BaO in Mengen bis ca. 100 ppm bzw. 0,1 Gew.-% in das Glas eingeschleppt werden.

Des weiteren ist es Aufgabe der Erfindung, auch den ZnO-Gehalt, wegen der oben diskutierten Nachteile möglichst gering zu halten oder soweit möglich auf ZnO gänzlich zu verzichten.

Die Aufgabe der Erfindung wird durch Kristallgläser nach den Ansprüchen 1, und 4 gelöst.

Das Glassystem ist aus einem Alkali-Kalk-Silikatglas aufgebaut.

Alkali-Kalk-Silikatgläser sind als Stand der Technik schon lange als toxikologisch unbedenkliche Gläser bekannt.

$SiO_2$ fungiert im Glas als Netzwerkbildner und kann in gewissen Grenzen gegen andere bekannte Netzwerkbildner, wie z.B. $B_2O_3$ ausgetauscht werden, ohne daß sich signifikante Änderungen hinsichtlich der Glasstabilität ergeben.

Der Kalk-Anteil fungiert als Netzwerkwandler, wobei dieser gegen andere zweiwertige Netzwerkwandler im erfindungsgemäßen Bereich ausgetauscht werden kann, z.B. gegen MgO, SrO oder ZnO. Allerdings ist die Möglichkeit der Einführung von MgO beschränkt, da mit einer MgO-Einführung das Entglasungsverhalten deutlich erhöht wird, was sich negativ auf die Produzierbarkeit dieser Gläser auswirkt. SrO und ZnO kann im Austausch gegen CaO ebenfalls in das Glas in den angegebenen Grenzen eingeführt werden. Die Einsatzmenge der Alkalien kann im erfindungsgemäßen Bereich frei gewählt werden, allerdings mit der Einschränkung, daß die gesetzlichen Bestimmungen zur "Kristallglaskennzeichnung" erfüllt werden.

Ein gewisser Fluorid-Anteil zur Verbesserung der Transmission im UV-Bereich und zur Unterstützung der Läuterung kann in das Glasgemenge eingebracht werden, z.B. als $CaF_2$.

Die Verwendung von $Li_2O$ ist auf den erfindungsgemäßen Bereich beschränkt, da diese Komponente ebenfalls stark erhöhend auf die Entglasungsneigung der Gläser wirkt.

Die Verwendung von Alkalien darf den nach der Erfindung vorgeschlagenen Bereich nicht überschreiten, da mit steigendem Alkaligehalt die thermische Dehnung erhöht, und damit die Temperaturwechselbeständigkeit der Gläser erniedrigt wird.

Als besonders vorteilhaft nach der vorliegenden Erfindung haben sich dabei $K_2O$-Gehalte von > 10-15 Gew.-% und $Na_2O$-Gehalte von 6-12 Gew.-%, bei einem CaO-Gehalt von 7-12 Gew.-% erwiesen.

Andererseits führt ein Unterschreiten des Alkaligehaltes zu einer sehr hohen Viskosität der Gläser, wodurch sich hohe Schmelzkosten ergeben und die Herstellung sehr viel schwieriger würde.

Wenn kein ZnO verwendet wird, was angestrebt wird, muß zur Erfüllung der gesetzlichen Vorschriften ein Anteil von mindestens 10 Gew.-% $K_2O$ eingeführt werden.

Dies kann die chemischen Eigenschaften der Gläser deutlich herabsetzen, wenn nicht, wie nach der Erfindung vorgeschlagen, mit $TiO_2$, in Verbindung mit $Al_2O_3$ oder mit $Nb_2O_5$ entgegengesteuert wird.

Auch Zugaben von $Ta_2O_5$ in dem nach der Erfindung vorgeschlagenen Rahmen wirken in diesem Sinne.

Da die Komponenten $Ta_2O_5$ und $Nb_2O_5$ sehr teuer sind, wird die Komponente $TiO_2$ in Verbindung mit $Al_2O_3$ bevorzugt.

Der gezielte Einsatz gerade dieser Komponente ist in bevorzugter Auswahl der erfinderischen Glaszusammensetzung, besonders in Verbindung mit $Al_2O_3$ zur Lösung der gestellten Aufgabe von besonderer Bedeutung.

Da diese Komponente neben der Brechzahl auch die chemische Beständigkeit der Gläser, sowie deren Härte erhöht, sind ihrer Verwendung die in der Erfindung genannten Grenzen gesetzt.

Wird der Anteil dieser Komponente höher als nach der Erfindung vorgeschlagen gewählt, so sind die Gläser kaum mehr wirtschaftlich zu bearbeiten, da die Schleifhärte eine nicht mehr tolerierbare Höhe erreicht hat, und eine Säurepolitur der Gläser nur noch schwer möglich ist.

Wird der Anteil jedoch zu niedrig gewählt, so besitzen die Gläser eine zu geringe chemische Beständigkeit. Gerade bei relativ rauhen Reinigungsprozessen, z.B. in Spülmaschinen, kann es dann zu unerwünschten Glasveränderungen, bis zur Zerstörung des Glases, kommen.

Es werden nach der Erfindung bevorzugt die Komponente $TiO_2$ in Mengen von mindestens 0,3 Gew.-% eingesetzt.

Die Gläser enthalten bevorzugt dazu auch noch 0,4-3,0 Gew.-% $Al_2O_3$.

Dieser Zusatz fördert die thermische und mechanische Widerstandsfähigkeit. Besonders schon geringe Zusätze dieses Oxids führen zu einer Verminderung der Korrosion der feuerfesten Auskleidung in den Schmelzaggregaten, wodurch störende Verunreinigungen aus diesen Auskleidungsmaterialien, z.B. $Fe_2O_3$, verringert werden können.

Eine Zugabe der Komponente $ZrO_2$ zusätzlich zu $TiO_2$ hat den Vorteil, daß bei annähernd gleicher Wirkungsweise auf die optischen Eigenschaften und die Brillianz der Gläser insgesamt weniger von dem gegen Reduktion empfindlichen $TiO_2$ verwendet werden kann. $TiO_2$ erhöht zusätzlich stark die UV-Absorption der Gläser.

Da $TiO_2$ die Säurebeständigkeit von Gläsern erhöht und $ZrO_2$ die Laugenbeständigkeit, kann dem schädlichen Einfluß von hohen Alkaligehalten auf die chemischen Eigenschaften durch Zugabe dieser beiden Oxide in erfinderischer Weise entgegengewirkt werden.

Gleichzeitig haben die Komponenten, und hier besonders die Komponente $TiO_2$, eine Schutzwirkung vor einer unerwünschten und störenden Solarisation.

Der erfindungsgemäße Bereich der Kristallglaszusammensetzung wurde derart gewählt, daß sich bei den Forderungen an das Glas insgesamt ein Optimum der Eigenschaften ergibt.

Als besonders bevorzugte Zusammensetzungen haben sich bei Versuchen Gemenge aus 66-69 Gew.-% $SiO_2$, 0.45-1.0 Gew.-% $Al_2O_3$, 7.6-10.6 Gew.-% $Na_2O$, > 10.0-12.5 Gew.-% $K_2O$, 8-11 Gew.-% CaO, 0.8-1.6 Gew.-% $TiO_2$ und 1.2-2.5 Gew.-% $ZrO_2$ und aus 66-69 Gew.-% $SiO_2$; 0.45-1.0 Gew.-% $Al_2O_3$; 7.6-11 Gew.-% $Na_2O$; > 10-12.5 Gew.-% $K_2O$, 4-7 Gew.-% CaO; 1.5-2.5 Gew.-% TiO und 1.2-2.5 Gew.-% $ZrO_2$ erwiesen.

Dabei ist zu beachten, daß der Gehalt an $TiO_2$, $ZrO_2$ oder $Ta_2O_5$ alleine oder in der Summe maximal 4 Gew.-% betragen sollte, da sich sonst die Ver-arbeitungs- und Gebrauchseigenschaften der Gläser verschlechtern.

Alle Glaszusammensetzungen enthalten Läuterhilfsmittel, z.B. $Sb_2O_3$, bis zu einem Gehalt von 1 Gew.-% und sie können übliche Mengen, bis zu 100 ppm an Entfärbungsmitteln, wie z.B. CoO, NiO, $Nd_2O_3$ enthalten, in Abhängigkeit der Reinheit der Ausgangsrohstoffe.

Um die Erfindung weiter zu verdeutlichen, sind beispielhaft in den Tabellen I, II und III die Glaszusammensetzungen und Eigenschaften von 10 daraus erschmolzenen Gläsern nach der Erfindung zusammengestellt.

Die Schmelzbeispiele wurden ohne Entfärbungsmittel geschmolzen. Es wurden darüberhinaus Rohstoffe eingesetzt, die eine BaO- und/oder PbO-Verunreinigung von max. 50 ppm im erschmolzenen Glas verursachen. Der Gehalt an $Fe_2O_3$ liegt in den Gläsern unter 150 ppm. Andere färbende Übergangsmetalle konnten in den Gläsern nicht nachgewiesen werden.

Neben dem Brechwert ist der Lichttransmissionsgrad ("Lichttransmission") nach DIN 67507 und die Normalfarbwertanteile x und y nach DIN 5033 bei einer Glasschichtdicke von 11 mm angegeben. Die Angabe des Lichttransmissionsgrades erfolgt in den Beispieltabellen in Teilen von 100 (%) für die Normlichtart C und den 2° Beobachter. Die Messungen wurden mit einem Spektralphotometer der Fa. Perkin-Elmer vom Typ Lambda 9 ausgeführt, das zur Verminderung von Meßfehlern durch Probeninhomogenitäten zusätzlich mit einer integrierenden Kugel ("Ulbricht-Kugel") ausgerüstet ist. Die angegebenen Meßwerte besitzen einen Meßfehler von ± 0.5 %.

Die Solarisationsbeständigkeit wird mittels eines Schnellbelichtungsgerätes "SUNTEST CPS" der Fa. Heraeus geprüft. Dabei wird die Probe von einer Xe-Lampe mit einer Leistungsaufnahme von 1.8 kW und einer maximalen Bestrahlungsstärke ($\lambda < 800$ nm; Filtersystem: "max UV") von 765 $W/m^2$ für einen Zeitraum von 121 h bestrahlt. Der Abstand zwischen Lampe und Probe beträgt dabei 19 cm. Zwischen Lampe und Probe ist an der im Gerät vorgesehenen Stelle eine Quarzglasschale mit IR reflektierender Schicht eingebaut, wodurch eine unerwünschte Aufheizung der Probe verhindert wird. Während der Bestrahlungsdauer wird eine Temperatur von 40°C an der Probe nicht überschritten. Die Bestrahlung wird an Proben von 5 mm Glasschichtdicke durchgeführt, und der spektrale Transmissionsgrad ("Transmission") bei einer Wellenlänge von 380 nm vor und nach der Bestrahlung gemessen. Der Unterschied in der Transmission vor und nach der Bestrahlung ist in Teilen von 100 (%) in der Zeile "Suntest" angegeben. Die Messungen wurden mit dem o.g. Spektralphotometer durchgeführt. Die angegebenen Meßwerte besitzen einen Meßfehler von ± 0.5 %. Weiterhin sind die Dichte der Gläser sowie die Klassen der hydrolytischen Beständigkeit nach DIN 12111 aufgeführt.

In Beispiel 2 wurden Oxide teilweise durch Fluoride ersetzt. $F_2$-O stellt bei diesem Beispiel den Anteil von Sauerstoffatomen dar, die durch Fluor ersetzt wurden. Durch die Angabe von $F_2$-O ist es möglich, eine Normierung der Beispiele auf 100 % durchzuführen, wenn Fluor eingesetzt wird.

Der Umrechnungsfaktor zur Umrechnung des Gewichtsanteils F in den Wert $F_2$-O errechnet sich dabei nach folgender Formel:

$$F_2\text{-O} = F \cdot \frac{(2 \times 19) - 16}{2 \times 19}$$

$$F_2\text{-O} = F \cdot 0{,}579.$$

Tabelle: 1

| Komponente | 1 | 2 | 3 |
|---|---|---|---|
| $SiO_2$ | 68,29 | 67,81 | 67,31 |
| $Al_2O_3$ | 0,68 | 0,60 | 0,86 |
| $Li_2O$ | | | 0,83 |
| $Na_2O$ | 7,50 | 7,51 | 7,35 |
| $K_2O$ | 12,08 | 11,70 | 10,13 |
| CaO | 8,98 | 9,15 | 12,25 |
| $TiO_2$ | 2,12 | 1,21 | 0,94 |
| $ZrO_2$ | | 1,48 | |
| $F_2$-O | | 0,20 | |
| $Sb_2O_3$ | 0,34 | 0,34 | 0,34 |
| $F_2$ | - | 0,35 | |
| | | | |
| optische Werte: | | | |
| $n_d$ | 1,530 | 1,531 | 1,534 |
| x | 0,3109 | 0,3109 | 0,3109 |
| y | 0,3179 | 0,3180 | 0,3179 |
| $\tau$ (%) | 90,4 | 90,3 | 90,3 |

Tabelle: 1 (fortgesetzt)

| Komponente | 1 | 2 | 3 |
|---|---|---|---|
| optische Werte: | | | |
| Suntest (%) | ± 0 | -1,0 | - 0,5 |
| physikalische Werte: | | | |
| $\rho$ | 2,52 | 2,55 | 2,55 |
| chemische Daten: | | | |
| hydrol. Kl. | 4 | 4 | 4 |

Tabelle: 2

| Komponente | 4 | 5 | 6 | 7 |
|---|---|---|---|---|
| $SiO_2$ | 65,90 | 67,90 | 67,27 | 66,19 |
| $Al_2O_3$ | 1,94 | 0,67 | 0,68 | 0,92 |
| $Na_2O$ | 8,27 | 8,59 | 8,85 | 7,61 |
| $K_2O$ | 10,29 | 10,15 | 10,69 | 12,21 |
| MgO | 1,64 | | | |
| CaO | 10,77 | 7,30 | 9,28 | 7,07 |
| SrO | | 4,19 | | |
| ZnO | | | | 4,72 |
| $TiO_2$ | 0,48 | 0,48 | | 0,94 |
| $ZrO_2$ | 0,38 | 0,38 | | |
| $Nb_2O_5$ | | | 2,89 | |
| $Sb_2O_3$ | 0,34 | 0,34 | 0,34 | 0,34 |
| optische Werte: | | | | |
| $n_d$ | 1,531 | 1,527 | 1,531 | 1,528 |
| x | 0,3110 | 0,3107 | 0,3107 | 0,3108 |
| y | 0,3183 | 0,3177 | 0,3178 | 0,3178 |
| $\tau$ (%) | 90,3 | 90,4 | 90,2 | 90,3 |
| Suntest (%) | - 1,5 | -1,0 | - 1,5 | -0,5 |
| physikalische Werte: | | | | |
| $\rho$ | 2,55 | 2,57 | 2,55 | 2,57 |
| chemische Daten: | | | | |
| hydrol. Kl. | 3 | 4 | 4 | 4 |

Tabelle: 3

| Komponente | 8 | 9 | 10 |
|---|---|---|---|
| $SiO_2$ | 66,02 | 62,09 | 63,46 |
| $B_2O_3$ | 2,00 | 1,71 | 1,71 |
| $Al_2O_3$ | 0,60 | 2,82 | 0,68 |
| $Na_2O$ | 8,75 | 3,79 | 3,86 |
| $K_2O$ | 10,43 | 14,29 | 14,45 |
| CaO | 9,18 | 4,36 | 4,93 |
| $TiO_2$ | 1,21 | 7,23 | 7,21 |
| $ZrO_2$ | 1,48 | 3,19 | 3,18 |
| $Sb_2O_3$ | 0,34 | 0,52 | 0,52 |

Tabelle: 3 (fortgesetzt)

| Komponente | 8 | 9 | 10 |
|---|---|---|---|
| optische Werte: | | | |
| $n_d$ | 1,536 | 1,559 | 1,561 |
| x | 0,3109 | 0,3139 | 0,3125 |
| y | 0,3179 | 0,3224 | 0,3201 |
| $\tau$ (%) | 90,4 | 88,8 | 89,3 |
| Suntest (%) | - 1,0 | $\pm$ 0 | $\pm$ 0 |
| physikalische Werte: | | | |
| $\rho$ | 2,57 | 2,60 | 2,60 |
| chemische Daten: | | | |
| hydrol. Kl. | 4 | 2 | 3 |

**Patentansprüche**

1. Blei- und bariumfreies Kristallglas zur Herstellung von hochwertigen Gläsern und Haushaltsgegenständen mit einer Lichttransmission von wenigstens 85 %, einem Brechwert $n_d$ von größer als 1.52, einer Dichte von mindestens 2.45 g/cm$^3$, einem $K_2O$ + ZnO-Anteil von größer 10 Gew.-%, hoher hydrolytischer Beständigkeit und guter Solarisationsbeständigkeit,
   **dadurch gekennzeichnet**,
   daß es sich aus (in Gew.-% auf Oxidbasis)

   | | |
   |---|---|
   | $SiO_2$ | 50 - 75 |
   | $Na_2O$ | 2 - 15 |
   | $K_2O$ | 5 - 15 |
   | CaO | 3 - 12 |
   | $B_2O_3$ | 0 - 10 |
   | $Al_2O_3$ | 0 - 5 |
   | $Li_2O$ | 0 - 5 |
   | MgO | 0 - 5 |
   | SrO | 0 - 7 |
   | ZnO | 0 - 7 |
   | $TiO_2$ | 0 - 8 |
   | $ZrO_2$ | 0 - 5 |
   | $Nb_2O_5$ | 0,1 - 5 |
   | $Ta_2O_5$ | 0 - 5 |
   | F | 0 - 2 |

   zusammensetzt, wobei die Summe von $TiO_2$ + $ZrO_2$ + $Nb_2O_5$ + $Ta_2O_5$ zwischen 0,3 - 12 Gew.-% beträgt und wobei die Summe der Alkalien größer als 15 Gew.-% ist.

2. Blei- und bariumfreies Kristallglas nach Anspruch 1,
   **dadurch gekennzeichnet**,
   daß der Gehalt an

   | | |
   |---|---|
   | $K_2O$ | 10 - 15 |
   | $Na_2O$ | 6 - 12 |
   | CaO | 7 - 12 |

   Gew.-% beträgt.

3. Blei- und bariumfreies Kristallglas nach Anspruch 1,
**dadurch gekennzeichnet,**
daß es einen $Al_2O_3$-Gehalt von 0,4 - 3,0 Gew.-% aufweist.

4. Blei- und bariumfreies Kristallglas zur Herstellung von hochwertigen Gläsern und Haushaltsgegenständen mit einer Lichttransmission von wenigstens 85 %, einem Brechwert $n_d$ von größer als 1.52, einer Dichte von mindestens 2.45 g/cm$^3$, einem $K_2O$-Anteil von größer 10 Gew.-%, hoher hydrolytischer Beständigkeit und guter Solarisationsbeständigkeit,
**dadurch gekennzeichnet,**
daß es sich aus (in Gew.-% auf Oxidbasis)

| | | |
|---|---|---|
| $SiO_2$ | 50 | — 75 |
| $Na_2O$ | 6 | — 12 |
| $K_2O$ | > 10 | — 15 |
| $CaO$ | 3 | — 12 |
| $B_2O_3$ | 0 | — 10 |
| $Al_2O_3$ | 0,4 | — 3 |
| $Li_2O$ | 0 | — 5 |
| $MgO$ | 0 | — 5 |
| $SrO$ | 0 | — 7 |
| $ZnO$ | 0 | — 7 |
| $TiO_2$ | 0,3 | — 8 |
| $ZrO_2$ | 0 | — 5 |
| $Nb_2O_5$ | 0 | — 5 |
| $Ta_2O_5$ | 0 | — 5 |
| F | 0 | — 2 |

zusammensetzt, wobei die Summe von $TiO_2 + ZrO_2 + Nb_2O_5 + Ta_2O_5$ zwischen 0,3 - 12 Gew.-% beträgt.

5. Blei und bariumfreies Kristallglas nach Anspruch 4,
**dadurch gekennzeichent,**
daß der Gehalt an

| CaO | 7 - 12 |
|---|---|

Gew.-% beträgt.

6. Blei- und bariumfreies Kristallglas nach den Ansprüchen 4 und 5,
**gekennzeichnet durch**
die Zusammensetzung

| | |
|---|---|
| $SiO_2$ | 66 - 69 |
| $Al_2O_3$ | 0,45 - 1,0 |
| $Na_2O$ | 7,6 - 10,6 |
| $K_2O$ | > 10,0 - 12,5 |
| $CaO$ | 8 - 11 |
| $TiO_2$ | 0,8 - 1,6 |

(fortgesetzt)

| ZrO$_2$ | 1,2 - 2,5 |
|---|---|

7. Blei- und bariumfreies Kristallglas nach Anspruch 4,
   **gekennzeichnet durch**
   die Zusammensetzung

| SiO$_2$ | 66 - 69 |
|---|---|
| Al$_2$O$_3$ | 0,45- 1,0 |
| Na$_2$O | 7,6 - 11 |
| K$_2$O | > 10,0 - 12,5 |
| CaO | 4 - 7 |
| TiO$_2$ | 1,5 - 2,5 |
| ZrO$_2$ | 1,2 - 2,5 |

8. Blei- und bariumfreies Kristallglas nach wenigstens einem der Ansprüche 1 bis 7,
   **dadurch gekennzeichnet,**
   daß der Gehalt an TiO$_2$, ZrO$_2$ oder Ta$_2$O$_5$ alleine oder in der Summe maximal 4 Gew.-% beträgt.

## Claims

1. Lead-free, barium-free crystal glass for the manufacture of high-quality glasses and household articles, having a light transmission of at least 85%, a refractive index $n_d$ greater than 1.52, a density of at least 2.45 g/cm$^3$, a K$_2$O + ZnO content greater than 10 wt-%, high hydrolytic resistance and good resistance to solarisation, characterised in that it is composed of the following (as wt-% based on oxide):

| SiO$_2$ | 50 - 75 |
|---|---|
| Na$_2$O | 2 - 15 |
| K$_2$O | 5 - 15 |
| CaO | 3 - 12 |
| B$_2$O$_3$ | 0 - 10 |
| Al$_2$O$_3$ | 0 - 5 |
| Li$_2$O | 0 - 5 |
| MgO | 0 - 5 |
| SrO | 0 - 7 |
| ZnO | 0 - 7 |
| TiO$_2$ | 0 - 8 |
| ZrO$_2$ | 0 - 5 |
| Nb$_2$O$_5$ | 0.1 - 5 |
| Ta$_2$O$_5$ | 0 - 5 |
| F | 0 - 2, |

with the sum of TiO$_2$ + ZrO$_2$ + Nb$_2$O$_5$ + Ta$_2$O$_5$ being between 0.3 and 12 wt-% and with the sum of the alkalis being greater than 15wt-%.

2. Lead-free, barium-free crystal glass according to Claim 1, characterised in that the percentages by weight of the following compounds are:

| K$_2$O | 10 | — | 15 |
|---|---|---|---|
| Na$_2$O | 6 | — | 12 |

```
CaO          7    -    12.
```

3. Lead-free, barium-free crystal glass according to Claim 1, characterised in that it exhibits an $Al_2O_3$ content of from 0.4 to 3.0 wt-%.

4. Lead-free, barium-free crystal glass for the manufacture of high-quality glasses and household articles, having a light transmission of at least 85%, a refractive index $n_d$ greater than 1.52, a density of at least 2.45 $g/cm^3$, a $K_2O$ content greater than 10 wt-%, high hydrolytic resistance and good resistance to solarisation, characterised in that it is composed of the following (as wt-% based on oxide):

| | |
|---|---|
| $SiO_2$ | 50 - 75 |
| $Na_2O$ | 6 - 12 |
| $K_2O$ | > 10 - 15 |
| CaO | 3 - 12 |
| $B_2O_3$ | 0 - 10 |
| $Al_2O_3$ | 0.4 - 3 |
| $Li_2O$ | 0 - 5 |
| MgO | 0 - 5 |
| SrO | 0 - 7 |
| ZnO | 0 - 7 |
| $TiO_2$ | 0.3 - 8 |
| $ZrO_2$ | 0 - 5 |
| $Nb_2O_5$ | 0 - 5 |
| $Ta_2O_5$ | 0 - 5 |
| F | 0 - 2, |

with the sum of $TiO_2 + ZrO_2 + Nb_2O_5 + Ta_2O_5$ being between 0.3 and 12 wt-%.

5. Lead-free, barium-free crystal glass according to Claim 4, characterised in that the percentage by weight of the following compound is:

| | |
|---|---|
| CaO | 7 - 12. |

6. Lead-free, barium-free crystal glass according to Claims 4 and 5, characterised by the composition:

| | |
|---|---|
| $SiO_2$ | 66 - 69 |
| $Al_2O_3$ | 0.45 - 1.0 |
| $Na_2O$ | 7.6 - 10.6 |
| $K_2O$ | > 10.0 - 12.5 |
| CaO | 8 - 11 |
| $TiO_2$ | 0.8 - 1.6 |
| $ZrO_2$ | 1.2 - 2.5. |

7. Lead-free, barium-free crystal glass according to Claim 4, characterised by the composition:

| | |
|---|---|
| $SiO_2$ | 66 - 69 |
| $Al_2O_3$ | 0.45 - 1.0 |
| $Na_2O$ | 7.6 - 11 |
| $K_2O$ | > 10.0 - 12.5 |
| CaO | 4 - 7 |
| $TiO_2$ | 1.5 - 2.5 |
| $ZrO_2$ | 1.2 - 2.5. |

8. Lead-free, barium-free crystal glass according to at least one of Claims 1 to 7, characterised in that the maximum content of $TiO_2$, $ZrO_2$ or $Ta_2O_5$, either alone or in total, is 4 wt-%.

**Revendications**

1. Verre de cristal sans plomb ni baryum, destiné à la fabrication de verres et d'objets ménagers de haute qualité, et présentant un taux de transmission de lumière d'au moins 85 %, un indice de réfraction $n_D$ supérieur à 1,52, une masse volumique d'au moins 2,45 g/cm$^3$, et une proportion de ($K_2O$ + $ZnO$) supérieure à 10 % en poids, ainsi qu'une forte résistance à l'hydrolyse et une bonne résistance à la solarisation, caractérisé en ce qu'il se compose, en pourcentages pondéraux d'oxydes, de:

| | |
|---|---|
| $SiO_2$ | 50 - 75 |
| $Na_2O$ | 2 - 15 |
| $K_2O$ | 5 - 15 |
| $CaO$ | 3 - 12 |
| $B_2O_3$ | 0 - 10 |
| $Al_2O_3$ | 0 - 5 |
| $Li_2O$ | 0 - 5 |
| $MgO$ | 0 - 5 |
| $SrO$ | 0 - 7 |
| $ZnO$ | 0 - 7 |
| $TiO_2$ | 0 - 8 |
| $ZrO_2$ | 0 - 5 |
| $Nb_2O_5$ | 0,1 - 5 |
| $Ta_2O_5$ | 0 - 5 |
| F | 0 - 2 |

la somme $TiO_2+ZrO_2+Nb_2O_5+Ta_2O_5$ représentant entre 0,3 et 12 % en poids, et le total des oxydes alcalins faisant plus de 15 % en poids.

2. Verre de cristal sans plomb ni baryum, conforme à la revendication 1, caractérisé en ce qu'il contient de 10 à 15 % en poids de $K_2O$, de 6 à 12 % en poids de $Na_2O$ et de 7 à 12 % en poids de $CaO$.

3. Verre de cristal sans plomb ni baryum, conforme à la revendication 1, caractérisé en ce qu'il contient de 0,4 à 3,0 % en poids de $Al_2O_3$.

4. Verre de cristal sans plomb ni baryum, destiné à la fabrication de verres et d'objets ménagers de haute qualité, et présentant un taux de transmission de lumière d'au moins 85 %, un indice de réfraction $n_D$ supérieur à 1,52, une masse volumique d'au moins 2,45 g/cm$^3$, et une proportion de ($K_2O$+ $ZnO$) supérieure à 10 % en poids, ainsi qu'une forte résistance à l'hydrolyse et une bonne résistance à la solarisation, caractérisé en ce qu'il se compose, en pourcentages pondéraux d'oxydes, de:

| | |
|---|---|
| $SiO_2$ | 50 - 75 |
| $Na_2O$ | 6 - 12 |
| $K_2O$ | > 10 - 15 |
| $CaO$ | 3 - 12 |
| $B_2O_3$ | 0 - 10 |
| $Al_2O_3$ | 0,4 - 3 |
| $Li_2O$ | 0 - 5 |
| $MgO$ | 0 - 5 |
| $SrO$ | 0 - 7 |
| $ZnO$ | 0 - 7 |
| $TiO_2$ | 0,3 - 8 |

(suite)

| | |
|---|---|
| $ZrO_2$ | 0 - 5 |
| $Nb_2O_5$ | 0 - 5 |
| $Ta_2O_5$ | 0 - 5 |
| F | 0 2 |

la somme $TiO_2+ZrO_2+Nb_2O_5+Ta_2O_5$ représentant entre 0,3 et 12 % en poids.

5. Verre de cristal sans plomb ni baryum, conforme à la revendication 4, caractérisé en ce qu'il contient de 7 à 12 % en poids de CaO.

6. Verre de cristal sans plomb ni baryum, conforme à l'une des revendications 4 et 5, caractérisé par la composition suivante:

| | |
|---|---|
| $SiO_2$ | 66 - 69 |
| $Al_2O_3$ | 0,45 - 1,0 |
| $Na_2O$ | 7,6 - 10,6 |
| $K_2O$ | > 10,0 - 12,5 |
| CaO | 8 - 11 |
| $TiO_2$ | 0,8 - 1,6 |
| $ZrO_2$ | 1,2 - 2,5 |

7. Verre de cristal sans plomb ni baryum, conforme à la revendication 4, caractérisé par la composition suivante:

| | |
|---|---|
| $SiO_2$ | 66 - 69 |
| $Al_2O_3$ | 0,45- 1,0 |
| $Na_2O$ | 7,6 - 11 |
| $K_2O$ | > 10,0 - 12,5 |
| CaO | 4 - 7 |
| $TiO_2$ | 1,5 - 2,5 |
| $ZrO_2$ | 1,2 - 2,5 |

8. Verre de cristal sans plomb ni baryum, conforme à au moins l'une des revendications 1 à 7, caractérisé en ce qu'il contient au maximum 4 % en poids de $TiO_2$, $ZrO_2$, et $Ta_2O_5$, considérés seuls ou ensemble.